Europäisches Patentamt

European Patent Office

Office européen des brevets

(11) Publication number : **0 526 070 A2**

# EUROPEAN PATENT APPLICATION

(21) Application number : **92306649.2**

(22) Date of filing : **21.07.92**

(51) Int. Cl.$^5$ : **H04N 5/217, H04N 3/15**

(30) Priority : **01.08.91 IL 99040**

(43) Date of publication of application :
**03.02.93 Bulletin 93/05**

(84) Designated Contracting States :
**AT BE CH DE DK ES FR GB GR IT LI LU MC NL PT SE**

(71) Applicant : **SCITEX CORPORATION LTD.**
**7 Hamada Street**
**Herzliya 46103 (IL)**

(72) Inventor : **Shtaierman, Yaacov**
**6 Hashiva Street**
**Netanya (IL)**

(74) Representative : **Hillier, Peter et al**
**Reginald W. Barker & Co., 13, Charterhouse**
**Square**
**London, EC1M 6BA (GB)**

(54) **Apparatus and method for determining geometrical parameters of an optical system.**

(57) An apparatus for changing the changeover pixels during an actual scan of an input medium including means for scanning across a two-dimensional surface during a non-actual scan, wherein the means for scanning includes at least two optically butt image sensors. The apparatus also includes means, operative during the non-actual scan, for determining the changing locations of changeover pixels of the image sensors, the changing locations caused at least by non-uniformities in the two-dimensional surface and correction means, operative during the actual scan, for redefining the changeover pixels in accordance with the output of the means for determining.

FIG.2A

FIG. 2B

## FIELD OF THE INVENTION

The present invention relates to measurement of geometrical parameters of an optical scanning system generally and in particular, to measurement of geometrical parameters of a scanning system having optically butt image sensors.

## BACKGROUND OF THE INVENTION

Image sensors, such as Charge Coupled Devices (CCDs), are utilized in electronic scanners for detecting light coming through an input image medium located on a scanning surface. To scan the entirety of a two-dimensional object in order to produce a scanned image, the image must be translated along a direction perpendicular to the scanning direction of the image sensors.

For a high resolution scan, the number of pixels on a single image sensor is not always sufficient especially if a large format input medium is scanned. Thus, two or more image sensors have to be optically butt in order to detect one high resolution line of the input medium.

It is known that, due to mechanical constraints, it is difficult to align image sensors perfectly. Therefore, in order to simplify the mechanical constraints and to allow greater alignment tolerances, any two sensors are placed such that part of the region of the input medium which one detects is also detected by the other. We call this region a "region of overlap".

Fig. BA-1 illustrates, in a simplified manner, the optics for a scanner with optical butting with, for example, three image sensors 10, 12 and 14. The image sensors 10, 12 and 14 detect light received through an input medium 16 pressed against an inner glass 18, typically via an outer glass 19.

The light received by sensors 10, 12 and 14 is provided by one of two light sources for illuminating transparent or reflective input media 16. A light source 15a is shown which illuminates transparent input media 16.

The image sensors 10, 12 and 14 each have associated with them a lens 20, 22 and 24, respectively, for focusing light from the medium 16 onto its respective image sensor.

In Fig. BA-1, lines 41 and 42 outline the field of view of image sensor 10 and define a detection region 30, the region of medium 16 which image sensor 10 detects. For image sensor 12, the field of view lines are lines 43 and 44 and the detection region is labeled 32. Similarly, for image sensor 14, the field of view lines are lines 45 and 46 and the detection region is region 34.

As can be seen in Fig. BA-1, the region of overlap between image sensors 10 and 12 is labeled region 36 and the region of overlap between image sensors 12 and 14 is labeled region 38.

As is known in the art, the output of any two adjacent, optically butt, image sensors has to be modified to produce an output scanned image which includes the information in the region of overlap only once. "Changeover points", the points in the input medium 16 at which the output of one image sensor ceases and the output of a Second image sensor commences must be defined for each adjacent pair of image sensors.

Within the regions of overlap 36 and 38, changeover points 47 and 48, respectively, are defined. The changeover points 47 and 48 respectively define the two edges of an outputable detection region 50 of image sensor 12, wherein the entirety of data from detection region 50 is used in the output scanned image.

Changeover points 47 and 48 also each define one of the two edges for each of outputable detection regions 52 and 54 of image sensors 10 and 14, respectively. Dotted lines 61 and 62 indicate sight lines which define the outputable region 52, dotted lines 63 and 64 indicate sight lines which define the outputable region 50 and dotted lines 65 and 66 indicate sight lines which define outputable region 54. Sight lines 62 and 63 come from changeover point 47 and sight lines 64 and 65 come from changeover point 48.

"Changeover pixels" are those pixels on the image sensors 10, 12 and 14 which perceive one of changeover points 47 or 48 or others which are not marked. The changeover pixels can be defined as complete pixels or, alternatively, they can have the accuracy of a partial pixel. In the latter case, the output at the changeover point is a weighted sum of a predetermined portion of the corresponding changeover pixel of the first image sensor and a predetermined portion of the corresponding changeover pixel of the second image sensor.

Techniques have been developed which define the changeover pixels 47 and 48. Typically, such techniques utilize predetermined specialized correction input patterns, known as "test" or "correction" patterns. The image sensors scan the correction patterns and the resultant output indicates the location of the changeover pixels. This can be performed during calibration and integration of the scanner or as a preparation step prior to each scan.

To correct misalignments between image sensors, the output of the image sensors is stored in a lines memory buffer. The output for one line of the scanned image is produced by selecting data from the appropriate stored line acquired from the appropriate image sensor in accordance with the extent of the correction necessary.

U.S. Patents 4,356,513, 4,465,939, 4,459,619 and 4,675,745 describe correction processes which utilize test patterns, operative during machine setup, to identify the changeover pixels.

U.S. Patent 4,870,505 describes a correction process utilizing a correction pattern utilized during a correction scan prior to an "actual scan", where the term actual scan refers to scanning during which image data is acquired and stored.

U.S. Patent 4,712,134 does not utilize a test pattern. Instead, it detects the change in density of pixels in the overlap region and utilizes the density change to define the changeover pixel for that region.

Those of the above-mentioned systems which acquire butting information from a correction pattern, acquire that information in one location, the "correction region", of the scanner. However, this is often not sufficient to properly correct for a multiplicity of non-uniformities of the system and/or the input medium 16. The non-uniformities can cause the changeover pixels to be incorrect in at least some regions of the actual scan, causing noticeable errors. These errors are illustrated in Figs. BA-2A, BA-2B, BA-2C, BA-3A, BA-3B, BA-3C, and BA-4 for overlap region 36.

For example, the thickness of the inner glass 18 may be non-uniform along a Y direction, perpendicular to the main scanning direction, under the entirety of the input medium. Figs. BA-2A, BA-2B, and BA-2C illustrate this problem. Fig. BA-2A illustrates a first region of glass 18 at which the correction data are acquired. The glass 18 has a thickness D in that region.

For regions of glass 18 with a thickness D1 less than D, the sight lines 62 and 63 intersect before reaching changeover point 47 and then spread out. The region between their locations of incidence on medium 16 is labeled 70. Because region 70 is part of both outputable regions 52 and 50, the scanned image has a "double image" in some place, meaning that some data are repeated.

For regions of glass 18 which are thicker than the region of correction (i.e. D2 > D), the sight lines 62 and 63 do not intersect before reaching input medium 16, as indicated by Fig. BA-2C. A region 72 is created which does not belong to either of outputable regions 52 or 50. This results in a scanned image with some missing data since region 72 is never output.

The flatness of the glass 18 under the input medium 16 may additionally, or alternatively, be non-uniform. If so, magnification differences occur such that the changeover pixel determined from the initial correction data will not be correct throughout the entirety of the actual scan. This is illustrated in Figs. BA-3A, BA-3B and BA-3C, where Fig. BA-3A is the same as Fig. BA-2A and illustrates what occurs at the correction region.

Fig. BA-3B illustrates that the non-flatness of glass 18 can result in a region of glass 18 being closer to the image plane of the sensors 10 and 12 by a distance h. The result is that the sight lines 62 and 63 do not intersect, leaving an unscanned region 74.

Fig. BA-3C shows that the non-flatness of glass 18 can result in a region of glass 18 being further from the image plane of image sensors 10 and 12 by distance h. In this situation, the sight lines 62 and 63 intersect before reaching input medium 16 and thus, a region 76 of double image is produced.

Fig. BA-4 illustrates a situation where the input medium 16 is inconsistent in height, as is often the case with media formed by the process of "paste-up" which involves cutting and pasting together at least two media.

In Fig. BA-4, the input medium 16 is formed of two levels 80 and 82, where level 82 is closer to the glass 18. Level 82 is only a partial level; wherever it does not exist, there is a "hole" 84. The changeover point 47 is correct for those regions where level 82 exists. For those regions where level 82 is replaced by hole 84, the sight lines 62 and 63 intersect at point 47 and spread out, thereby creating a region 86 which is part of both outputable regions 50 and 52.

The situation of Fig. BA-4 is partially corrected in the prior art by forcing the part of level 80 behind hole 84 against glass 18, typically via the use of vacuum apparatus. However, this still leaves a hole, albeit a smaller one, and is additionally, an expensive process due to the addition of the vacuum apparatus.

## SUMMARY OF THE INVENTION

It is therefore an object of the present invention to provide systems and methods of correcting scanner output which provide generally good results in the presence of the conditions described hereinabove. The present invention provides two-dimensional determination of changeover pixel location.

In accordance with the present invention there is provided an apparatus for changing the changeover pixels during an actual scan of an input medium including means for scanning across a two-dimensional surface during a non-actual scan, wherein the means for scanning includes at least two optically butt image sensors. The apparatus also includes means, operative during the non-actual scan, for determining the changing locations of changeover pixels of the image sensors, the changing locations caused at least by non-uniformities in the two-dimensional surface and correction means, operative during the actual scan, for redefining the changeover pixels in accordance with the output of the means for determining.

There is further provided in accordance with the present invention apparatus for two-dimensional mapping of a two-dimensional scan plane including means for scanning across the scan plane during a non-actual scan, the means for scanning including at least two optically butt image sensors and means, operative during the non-actual scan, for determining effects of non-uniformities in the two-dimensional scan plane on an output image. The means for determining include at least one light source for providing a beam of light to a region of overlap on the input medium between two of the at least two image sensors, while each of the two image sensors provide output indicating where the beam of light is imaged. There is also provided means for receiving the image sensor output for defining the changeover pixels.

The means for determining further include a calibration page including a non-uniformity measurement area including markings extending in a direction perpendicular to a scanning direction, each of the markings located at an overlap region of two of the image sensors, a page registration area for repeatably aligning the calibration page in the scanner and including a misalignment measurement area for measuring the extent of misalignment of the image sensors in the scanning direction and in a direction perpendicular to the scanning direction.

The correction means include a two-dimensional LookUp Table (LUT) including a LUT selector and a plurality of one-dimensional LUTs.

Additionally in accordance with the present invention there is provided apparatus for determining the geometry of an optical system including at least one image sensor, at least one lens and a scan plane, including at least one focused light source for illuminating the scan plane thereby to create a pattern of light, wherein the at least one image sensor detects the pattern of light and provides output regarding the pattern of light and means for determining geometrical parameters of the optical system from the output of the at least one image sensor. Also included herein are means for scanning a two-dimensional surface located in the scan plane in order to determine two-dimensional geometrical parameters of the optical system wherein the at least one image sensor includes at least two image sensors and wherein the geometrical parameters are optical butting parameters and the focused light source is selected from the group of point light sources and light sources operating in conjunction with fiber optic fibers.

In accordance with the present invention there is additionally provided apparatus for determining changeover pixels for at least two image sensors detecting an input medium including at least one light source for providing a beam of light to a region of overlap on the input medium between two of the at least two image sensors, each of the two image sensors providing output indicating where the beam of light is imaged and means receiving the image sensor output for defining the changeover pixel and means for scanning the input medium thereby to define changeover pixels for the entirety of the input medium. The light source is selected from the group of point light sources and light sources operating in conjunction with fiber optic fibers and includes a converging lens for each light source for providing a short line of light in the region of overlap. The apparatus for determining is characterized in that it produces a test pattern.

Further provided in accordance with the present invention is a calibration page for a scanner useful in determining a changeover pixel for at least two image sensors detecting an input medium, the calibration page including a page registration area for repeatably aligning the calibration page in the scanner and a non-uniformity measurement area comprising markings in a direction perpendicular to a scanning direction, where each of the markings is located at an overlap region of two of the at least two image sensors. The calibration page also includes a misalignment measurement area for measuring the extent of misalignment of the image sensors in the scanning direction and the perpendicular to the scanning direction.

Additionally provided herein in accordance with the present invention is a method for changing the changeover pixels during an actual scan of an input medium, the method including the steps of scanning across a two-dimensional surface during a non-actual scan utilizing at least two optically butt image sensors. The method also includes determining the changing locations caused at least by non-uniformities in the two-dimensional surface of changeover pixels of the image sensors during the non-actual scan and redefining the changeover pixels in accordance with the output of the step of determining.

Further in accordance with the present invention there is provided a method for two-dimensional mapping of a two-dimensional scan plane, the method including the steps of scanning across the scan plane during a non-actual scan utilizing at least two optically butt image sensors and determining effects of non-uniformities in the two-dimensional scan plane on an output image during the non-actual scan.

In accordance with the present invention there is further provided a method wherein the step of determining comprises the step of providing, with at least one light source, a beam of light to a region of overlap on the input medium between two of the at least two image sensors and the step of producing, from each of the two image sensors, output indicating where the beam of light is imaged. The method also includes the step of receiving the image sensor output for defining the changeover pixels.

Further in accordance with the present invention there is provided a method for determining the geometry of an optical system including at least one image sensor, at least one lens and a scan plane, the method including the steps of illuminating the scan plane with at least one point light source creating therewith a pattern of light, detecting the pattern of light with the at least one image sensor and providing output regarding the pattern of light and determining geometrical parameters of the the optical system from the output. Also included is the step of scanning a two-dimensional surface located in the scan plane in order to determine two-dimensional geometrical parameters of the optical system.

In accordance with a further embodiment of the present invention, the method includes at least one image sensor which comprises at least two image sensors and wherein the geometrical parameters are optical butting parameters.

## BRIEF DESCRIPTION OF THE DRAWINGS

The present invention will be understood and appreciated from the following detailed description, taken in conjunction with the drawings in which:

Fig. BA-1 is a schematic illustration of a scanner with optically butt image sensors;

Figs. BA-2A, BA-2B, and BA-2C are schematic illustrations of the effects on optical butting for three regions of a glass having different thicknesses, where Fig. BA-2A shows the thickness of the glass at a first region where correction data are acquired, Fig. BA-2B shows a second region of thinner glass and Fig. BA-2C shows a third region of thicker glass;

Figs. BA-3A, BA-3B, and BA-3C are schematic illustrations of the effects on optical butting for three regions of a glass having different flatness, where Fig. BA-3A shows the flatness of the glass at the first region, Fig. BA-3B shows a fourth region of glass closer to image sensors of the system of Fig. BA-1 and Fig. BA-3C shows a fifth region of glass further from the image sensors;

Fig. BA-4 is a schematic illustration showing the effects on optical butting of an input medium to be scanned having different levels of material;

Fig. 1A is a schematic illustration of a portion of a calibration page, constructed in accordance with an embodiment of the present invention, for calibrating the misalignment of the image sensors of Fig. BA-1 and for measuring changes to the calibration over the course of a two-dimensional scan which occur due to non-uniformities of the glass of Fig. BA-1;

Fig. 1B is an schematic isometric drawing of elements of a scanner with the calibration page of Fig. 1A placed on it;

Fig. 2A is a schematic illustration of a scanner, constructed and operative in accordance with the present invention, having point illumination light sources useful for dynamically measuring the locations of changeover points;

Fig. 2B is a schematic isometric illustration of the scanner of Fig. 2A;

Fig. 3A is a schematic illustration showing the operation of the scanner of Fig. 2A at a first region where correction data are acquired;

Figs. 3B, 3C, 3D, 3E are schematic illustrations showing the operation of the scanner of Fig. 2A in the presence of glass with the non-uniformities of Figs. BA-2B, BA-2C, BA-3B, BA-3C;

Fig. 3F is a schematic illustration showing the operation of the scanner of Fig. 2A in the presence of media non-uniformities shown in BA-4;

Fig. 4 is a block diagram illustration of interpolation and correction circuitry for performing data correction utilizing the measurements provided by either the calibration page of Fig. 1A or the apparatus of Fig. 2A;

Fig. 5 is a schematic illustration of a two-dimensional LookUp Table (LUT) useful in the circuitry of Fig. 4;

Fig. 6 is an illustration useful in understanding the interpolation operations of the circuitry of Fig. 4;

Figs. 7A, 7B, 7C, 7D and 7E are illustrations useful in understanding the preparation of one LUT forming a portion of the two-dimensional LUT of Fig. 5; and

Fig. 8 is a schematic illustration of a portion of an image sensor useful in understanding the preparation of one LUT of Fig. 5.

## DETAILED DESCRIPTION OF PREFERRED EMBODIMENTS

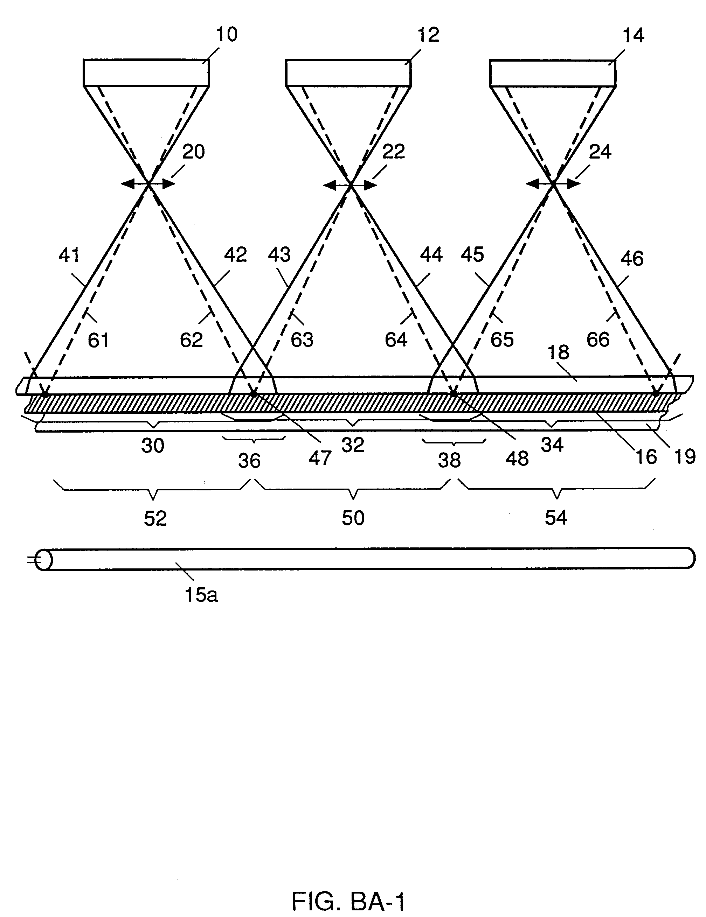

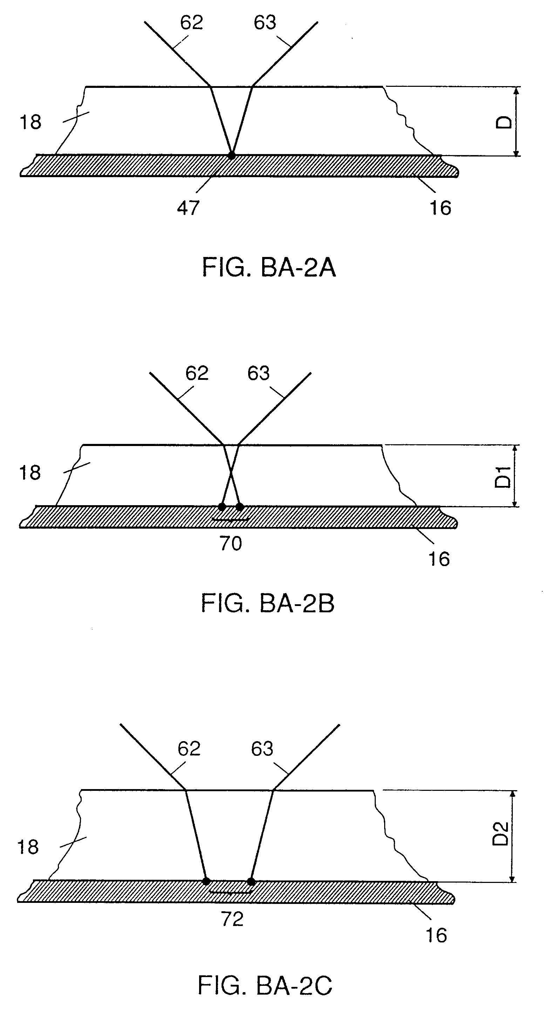

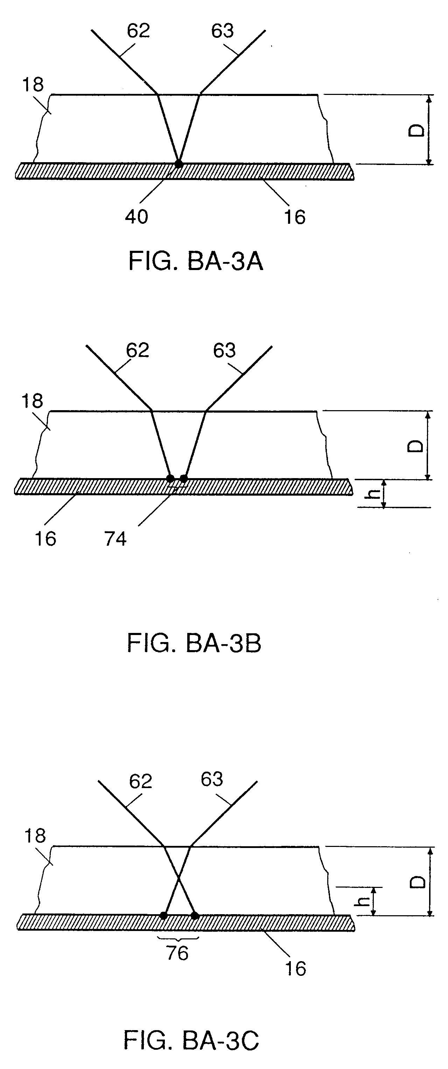

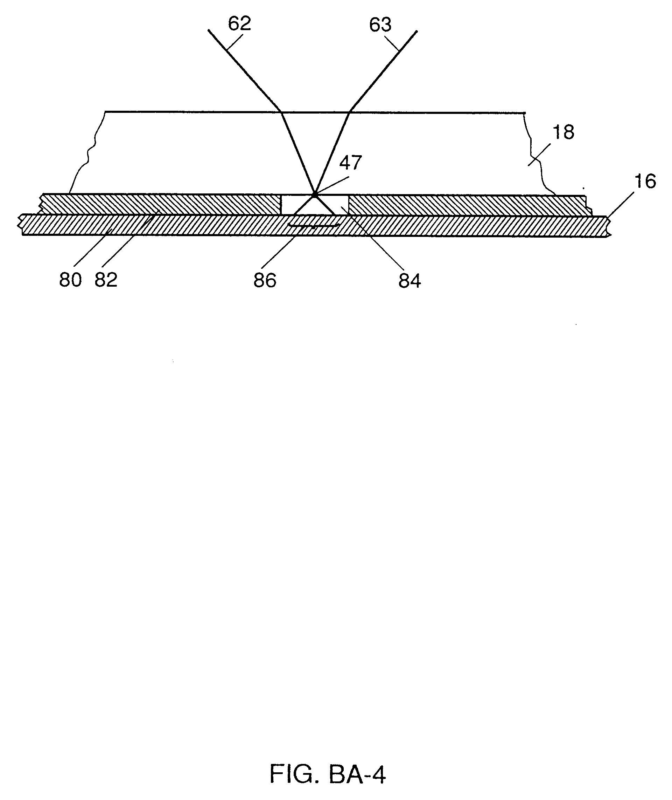

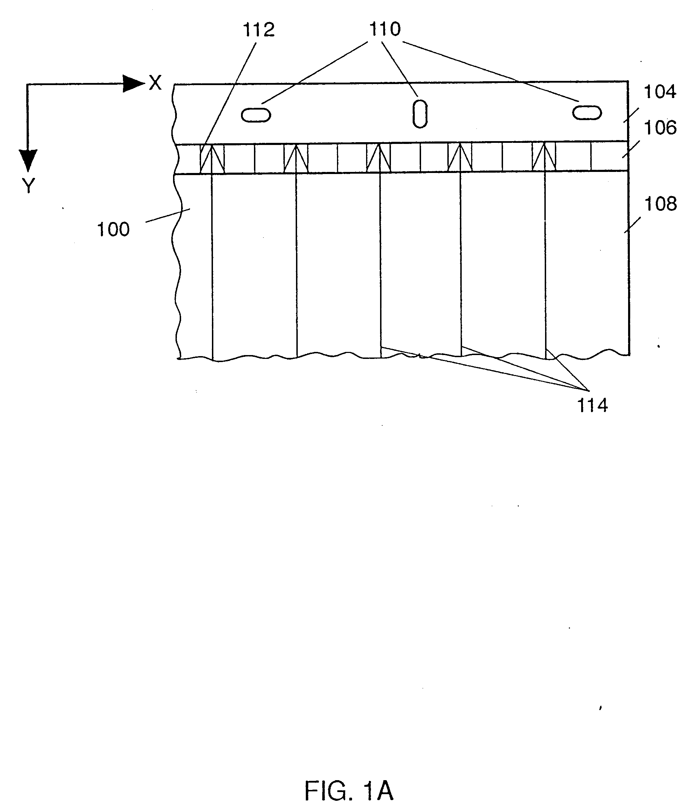

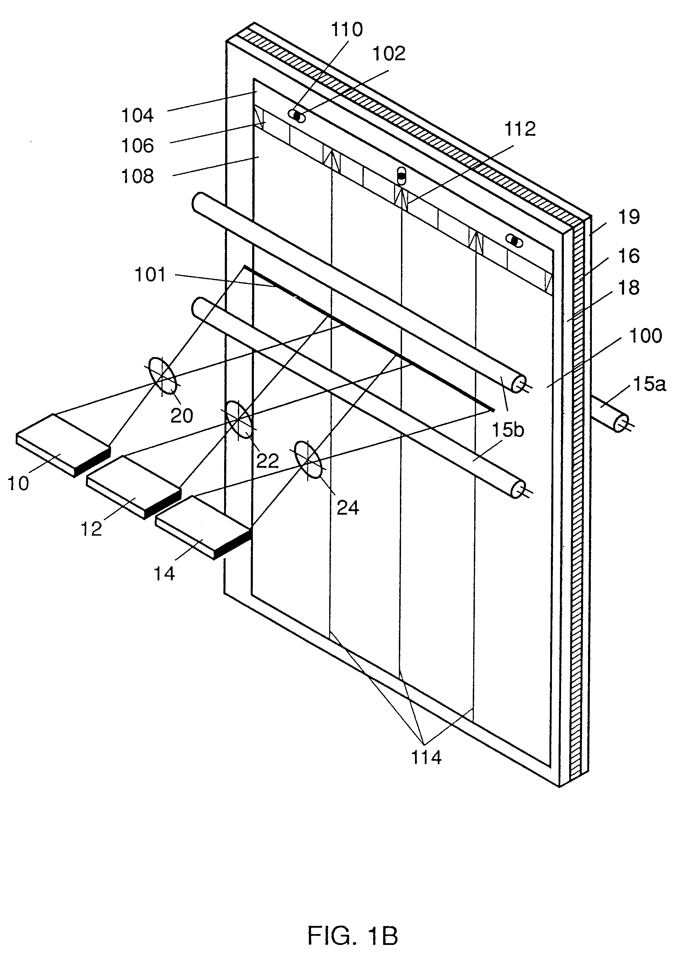

Reference is now made to Figs. 1A and 1B which respectively illustrate a calibration page 100 and its placement within a scanner. Calibration page 100 is utilized during calibration of the image sensors 10, 12 and 14 (Fig. BA-1), which for the purpose of the following discussion only, are one line image sensors. It will be understood that the present invention is also operative for image sensors 10, 12 and 14 which sense a plurality of lines.

It will be appreciated that Fig. 1B illustrates the system of Fig. BA-1 in an isometric manner. Included are the two types of light sources wherein the light source labeled 15a is for transparent input media and the light sources labeled 15b is for reflective input media.

Image sensors 10, 12 and 14 provide an actual two-dimensional scan by performing a plurality of one line scans. Fig. 1B shows the sensors 10, 12 and 14 detecting an imaged line 101.

As shown in Fig. 1B, the calibration page 100 is placed between inner glass 18 and outer glass 19 and is designed to be repeatably and accurately aligned, typically via registration pins 102. It will be appreciated that calibration page 100 is of transparent or reflective material.

The page 100 typically is divided into three areas, an optional page registration area 104, an optional adjustment and misalignment measurement area 106 and a non-uniformity measurement area 108.

Page registration area 104 typically includes a multiplicity of holes 110 of sizes and locations matching the sizes and locations of the registration pins 102. The holes 110 are utilized to place the page 100 onto registration pins 102, thereby repeatably and accurately aligning page 100.

Misalignment measurement area 106 typically includes a correction pattern 112 for adjusting the optical system during integration and service. This includes measuring the changeover pixels of the image sensors 10, 12 and 14 in a scanning direction, labeled X, and the misalignment of the image sensors 10, 12 and 14 in a translating direction, labeled Y. The measured data are stored in a correction table to be used during the entirety of scans of an input medium.

The correction pattern 112 can be any suitable pattern which will indicate at least the location of the changeover pixels and optionally, also the extent of the misalignment in the Y direction. For example, the pattern 112, shown in Fig. 1B, is similar to the calibration pattern used for the integration and service of the SmartScanner or the SmarTwo scanners manufactured by Scitex Corporation Ltd. of Herzlia, Israel. This calibration pattern consists of a plurality of lines and is operated on in a manner similar to that described in U.S. Patent 4,870,505, which patent is incorporated herein by reference.

The correction pattern 112 can also be placed in a calibration region located somewhere on the scanner itself. If so, calibration page 100 does not have to include area 106.

Non-uniformity measurement area 108 typically includes a plurality of lines 114 each located somewhere in the overlap region between every two image sensors. Lines 114 extend to the end of page 100, in the Y direction.

Lines 114 define the changeover points between outputable regions 50, 52 and 54 over the entirety of the scanned portion of inner glass 18. To that end, lines 114 need only be located somewhere within the overlap regions 36 and 38.

The location of the changeover pixels on image sensors 10, 12 and 14 can change from the initial location measured with the correction pattern 112 over the scanned portion of inner glass 18. From the measured change in the location in the X direction, a change in the Y direction can also be calculated, as described hereinbelow. However, the change in the Y direction is typically minimal and can be ignored, if desired.

Calibration page 100 can either have a clear background with black markings or its negative, a black background with clear markings.

The calibration with calibration page 100 is typically performed at the time of installation and servicing and results in changeover pixel information over the course of the entire two-dimensional scan which is typically stored in a suitable storage medium, such as a hard disk (not shown).

Page 100 is scanned according to the following steps:

1) The correction pattern 112 is first scanned and initial locations of the changeover pixels and the extent of the misalignment are determined and stored.

2) The non-uniformity measurement area 108 is then scanned and the locations of the changeover pixels at certain lines are stored. The changeover pixel data can be stored for every line, for every predetermined number of lines, or as often as a correctable change is measured. If the changeover pixel data is not stored for every line, then the data is relevant for the region of the scanned image between measured lines.

3) For each measurement line of step 2, the changeover pixels are determined by the image of lines 114 on each image sensor. If a line 114 is imaged by more than one pixel on an image sensor, the center of mass of the pixels which imaged the line 114 is calculated and is determined to be the location of the changeover pixel. The center of mass calculation provides accurate determination of the location, in fractional portions of pixels. The center of mass calculation is as follows:

$$\text{center\_of\_mass} = \frac{\Sigma\, L_i * V_i}{\Sigma\, V_i} \quad (1)$$

where $L_i$ is the location of a pixel i and $V_i$ is the intensity value of pixel i, where i indexes those pixels which imaged line 114 in a given overlap area.

The result of the measurements described hereinabove is a set of parameters describing the effect of the non-uniformities of the glass 18 on the image geometry, covering the entirety of the two-dimensional page 100. Since the non-uniformities of the glass 18 do not generally change with time, the changeover pixel and misalignment information are stored on a storage device (not shown) of the scanner, such as a hard disk.

Prior to an actual scan, the stored information is utilized to create correction tables, one for each region in which correction is desired. Each correction table includes the addresses in the image sensor 10, 12 or 14 from which each pixel in the scanned image is taken. The correction tables are then loaded into the scanner for operation during the actual scan.

During scanning of an input medium, a first correction table is operative for a first region. At the end of the first region, the next correction table, covering the next region, is selected. The process continues until the scan is finished.

It will be appreciated that the calibration page 100 provides two-dimensional changeover pixel information operative for correcting those non-uniformities of inner glass 18 occurring at the regions of overlap between two image sensors and at the edge of the scannable region. These uniformities are generally fixed and therefore, can be measured and stored during calibration and servicing. It will be noted, however, that calibration page 100 does not correct for media non-uniformities.

It will further be appreciated that the correction changes in accordance with the non-uniformities of the inner glass 18.

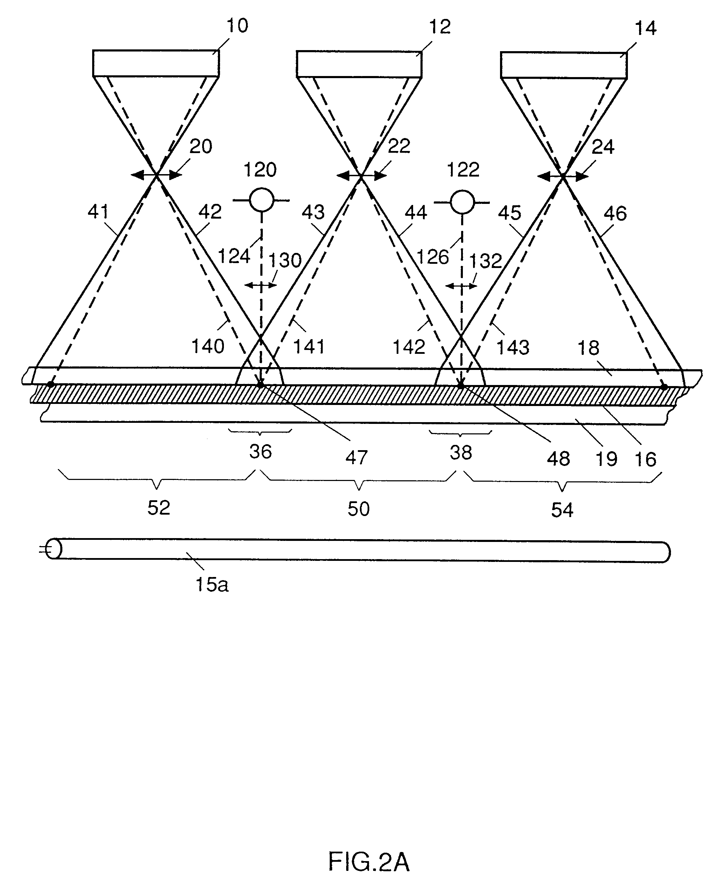

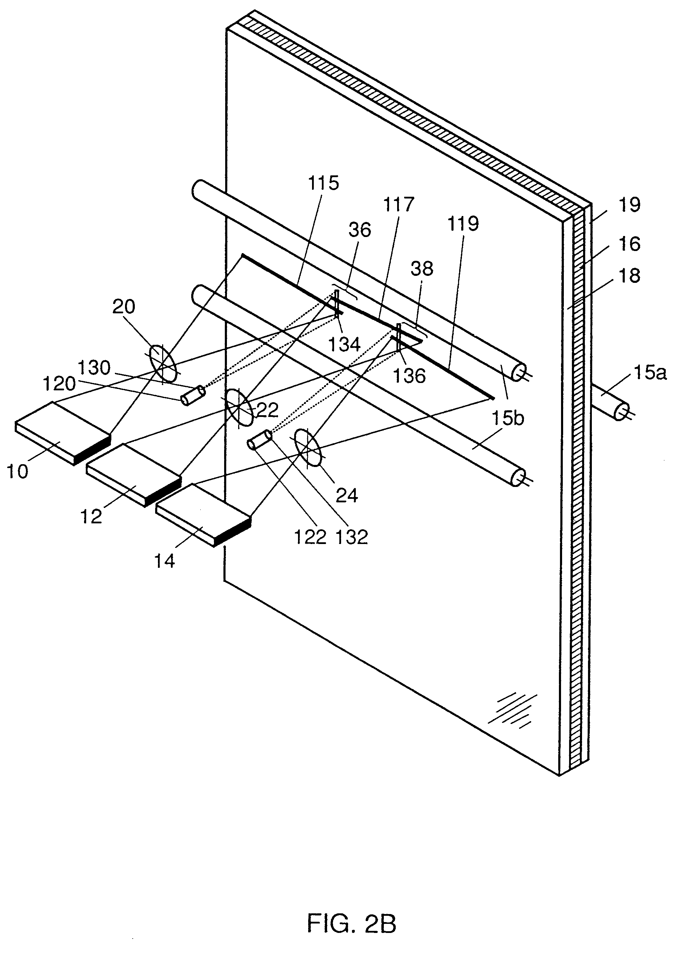

Reference is now made to Figs. 2A and 2B which illustrate an alternative embodiment of the present invention which utilizes a plurality of point light sources to generate a calibration pattern which functions in manner similar to lines 114 (Fig. 1A). The present embodiment can be utilized to measure the optical geometry of the scanner and/or to calibrate the scanner; however, it is a feature of the present embodiment that it is utilized for measuring the locations of changeover pixels during the scan process.

Fig. 2A is similar to Fig. BA - 1 with the addition of a multiplicity of point light sources, where the number of point light sources is one less than the number of image sensors. Fig. 2B is similar to Fig. 1B, however, in Fig. 2B, the imaged line 101 is shown as three misaligned imaged lines 115, 117 and 119.

Shown in Figs. 2A and 2B are two point light sources 120 and 122 where, in accordance with the present invention, point light source 120 is located generally between image sensors 10 and 12 and point light source 122 is located generally between image sensors 12 and 14. Point light sources 120 and 122 can be any suitable light source which can focus the required light beam on medium 16, such as a plurality of Light Emitting Diodes (LEDs), a plurality of lasers, or a single light source operating in conjunction with a plurality of fiber optics. The focusing can be performed in conjunction with corresponding optional lenses 130 and 132.

The point light sources 120 and 122 are located so as to shine light beams 124 and 126, respectively, on respective overlap areas 36 and 38 to be detected by the corresponding image sensors. To this end, light sources 120 and 122 are located between the image sensors and outside of the fields of view of the image sensors 10, 12 and 14.

In order to ensure that the image sensors detect light beams 124 and 126, despite the possible misalignment of the image sensors in the Y direction, each light source 120 or 122 can produce a short line of light 134 or 136, respectively, within the overlap areas 36 and 38. This can be achieved through lenses 130 and 132 which can be converging lenses.

Fig. 2A shows that image sensor 10 images the light from point light source 120 along sight line 140, image sensor 12 images the light from light sources 120 and 122 along sight lines 141 and 142, respectively, and image sensor 14 images the light from light source 122 along sight line 143. It is a feature of the present invention that the sight lines 140 - 143 are identical to sight lines 62 - 65 (Fig. BA-1) for a perfectly uniform inner glass 18 with a uniform medium 16.

In accordance with the present invention, sight lines 140 - 143 always define the edges of outputable regions 50, 52 and 54 and therefore, always define the locations of the changeover points 47 and 48.

During a preparation stage of the scan process, point light sources 120 and 122 shine light beams 124 and 126 directly on the overlap regions 36 and 38 to determine the locations of changeover points 47 and 48 over the scanned area. The center of mass of the pixels in each image sensor which detect light along sight lines 140 - 143 is the changeover pixel for that image sensor for the given overlap region.

It will be appreciated that, as in the previous embodiment, the location of the changeover pixels can be a fraction of a pixel.

The apparatus of Figs. 2A and 2B is utilized as follows:

1) A correction pattern, such as the ones described hereinabove, can be utilized to define the initial correction table, as described hereinabove. Alternatively, previously stored initial correction parameters can be read.

2) The scanner is then operated with the input medium 16 in place. Point light sources 120 and 122 are illuminated and generate, in conjunction with the scanning motion of the scanner, a pattern similar to lines 114. The effect of the entirety of non-uniformities is thus measured.

The locations of the changeover pixels at certain lines are measured. As previously, the changeover pixel data can be measured for every line, for every predetermined number of lines, or as often as a correctable change is measured.

3) For each measurement line of step 2, the changeover pixels are determined by the image of one of light lines 134 and 136 on each image sensor. As previously, the center of mass of the pixels which imaged the light lines 134 or 136 is calculated and is determined to be the location of the changeover pixel.

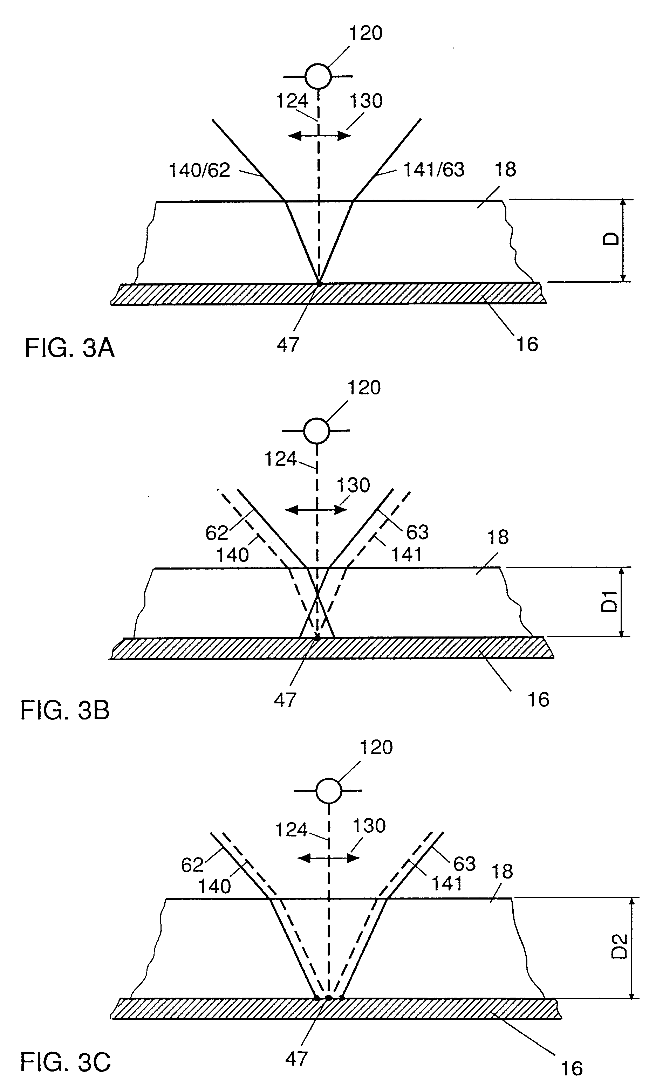

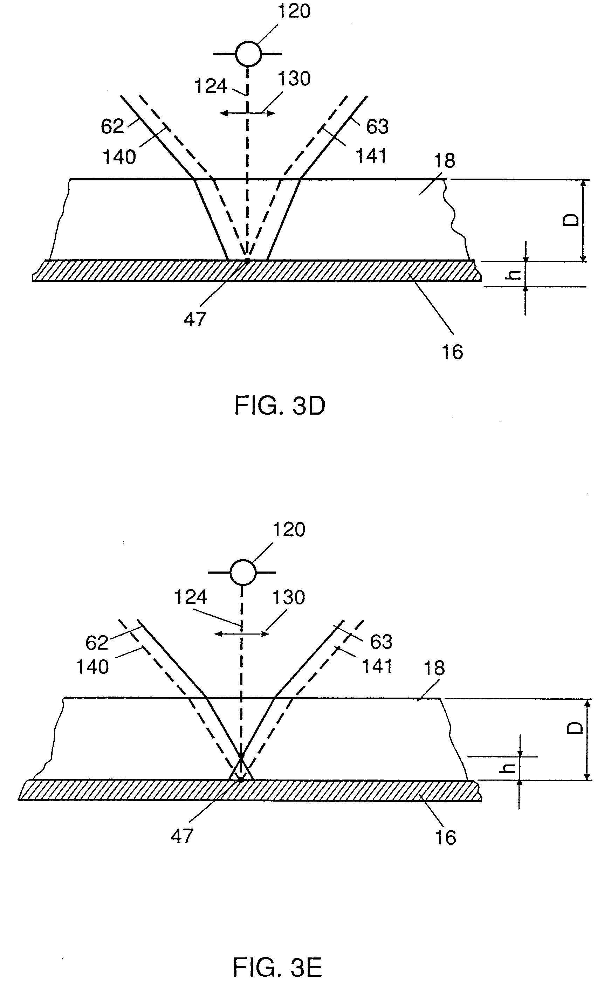

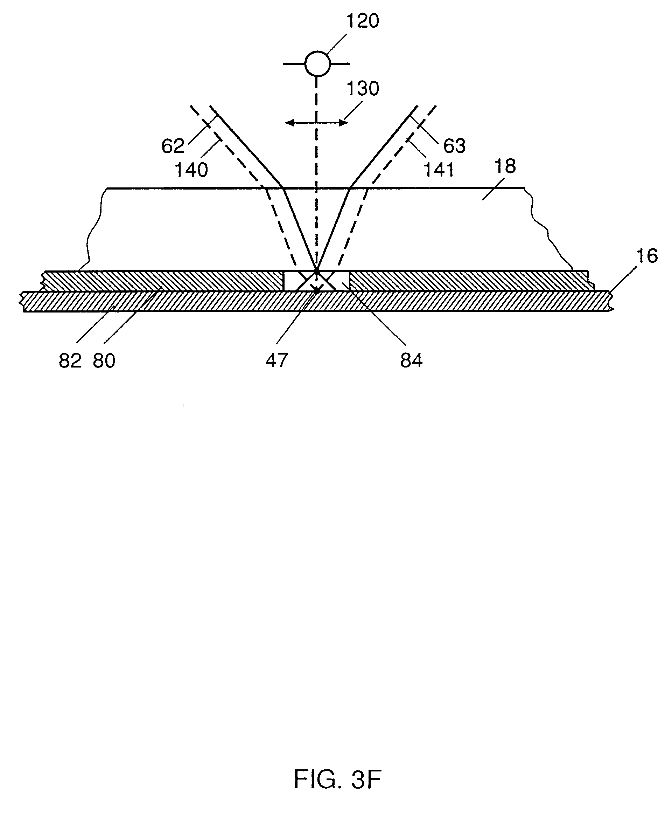

Reference is now briefly made to Fig. 3A which illustrates, in a manner similar to that of Fig. BA-2A, the response of the apparatus of Fig. 2 in the area where the calibration pattern was scanned. Reference is also now briefly made to Figs. 3B, 3C, 3D, 3E and 3F which illustrate the response of the apparatus of Fig. 2 to the non-uniformities presented in Figs. BA-2B, BA-2C, BA-3B, BA-3C, BA-4.

Each figure indicates, with a solid line, the sight lines 62 and 63 which come from the location of the initial changeover pixel, as defined in the prior art. Each figure also indicates, with a dotted line, the rays 140 and 141 coming from the updated changeover point which is illuminated by point light source 120 of the present invention.

It is a feature of the present invention that, for each non-uniformity including media non-uniformities, such as paste-up of Fig. 3F, sight lines 140 and 141 always come from changeover point 47. This occurs, as will be understood by anyone skilled in the art, because light beam 124 always illuminates overlap region 36 and is simultaneously detected by the two adjacent image sensors 10 and 12.

Figs. 3A - 3F will not be discussed in detail since it is believed that they are self-explanatory.

The apparatus of Fig. 2A can also be utilized to calibrate fixed non-uniformities as a calibration step by placing a reflective medium of constant thickness and uniform bright color as the input medium 16 and scanning as above. The information gained can be stored and utilized in every scan of media which have no media non-uniformities.

It will be appreciated that the apparatus of Fig. 2A can be utilized for determining the geometry of any type of optical system which comprises at least one image sensor, at least one lens and a scan plane. In this embodiment, the apparatus of Fig. 2A comprises at least one point light source which illuminates the scan plane, creating therewith a pattern of light. The image sensor detects the pattern of light, as discussed hereinabove.

The location of the pattern of light on the image sensor can provide information regarding the effect of non-uniformities on optical parameters, such as magnification, sensor misalignment, etc. The information thus gained can be utilized for correction, or other, purposes.

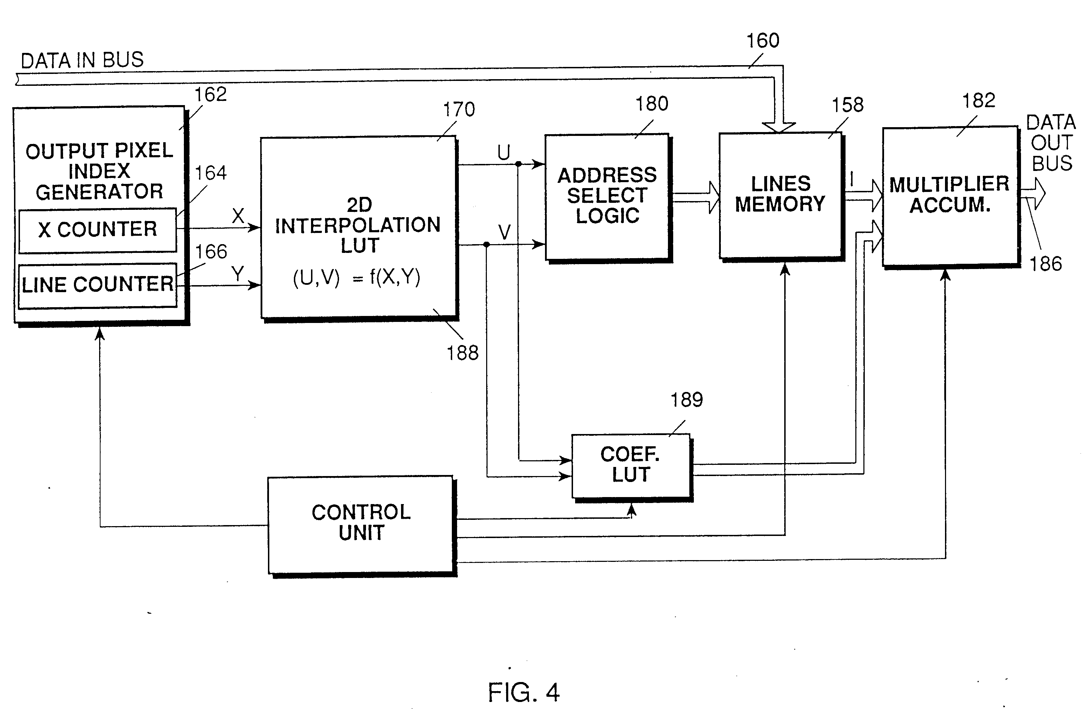

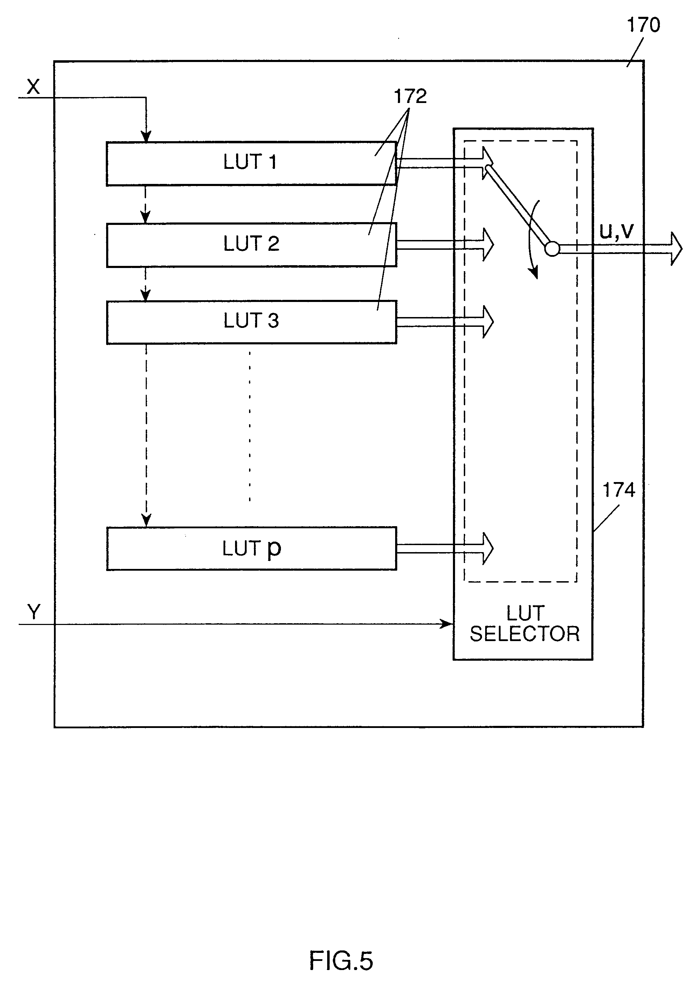

Reference is now made to Figs. 4 and 5. Fig. 4 schematically illustrates circuitry for implementing correction, in conjunction with interpolation, utilizing the measurements provided by the calibration page of Fig. 1 or the apparatus of Fig. 2. Fig. 5 schematically illustrates the construction of a two-dimensional interpolation LookUp Table (LUT).

The circuitry of Fig. 4 interpolates and corrects data arriving on an incoming data bus 160 to provide scanned output data which has a desired enlargement and has none of the effects of the butted and possibly misaligned image sensors.

The circuitry comprises a lines memory 158 into which streams the incoming data. Lines memory 158 is typically a cyclic buffer memory of a multiplicity of lines.

The circuitry additionally comprises an output pixel index generator 162 for generating a desired output pixel index in the output scanned image. The index is generated via an X counter 164 and a line counter 166. The X counter 164 generates the index X of the pixel within the output line and the line counter 166 generates the output line index Y.

The X and Y indices are provided to a two-dimensional interpolation LUT 170 which converts the indices X and Y to the appropriate addresses U and V in lines memory 158 where the desired data to be output resides. LUT 170 is described in more detail in Fig. 5 to which reference is now briefly made.

The LUT 170 comprises a multiplicity of one-dimensional interpolation LUTs 172 each comprising one line of address information operative for at least one consecutive line of the output scanned image. LUT 170 additionally comprises a LUT selector 174 for receiving the Y index and for selecting on output the appropriate one of LUTs 172 based on the Y index.

LUT 170 operates as follows. The LUT selector 174 selects an appropriate LUT 172 based on the Y index. The address values (U,V) found at the X location of the selected LUT 172 can be whole values, or fractional values, as necessary.

Reference is now made back to Fig. 4. The whole portions of values U and V are provided to an address select logic element 180 which selects the intensity value I in lines memory 158 which is stored at the address (whole(U),whole(V)) and provides I to a multiplier-accumulator 182.

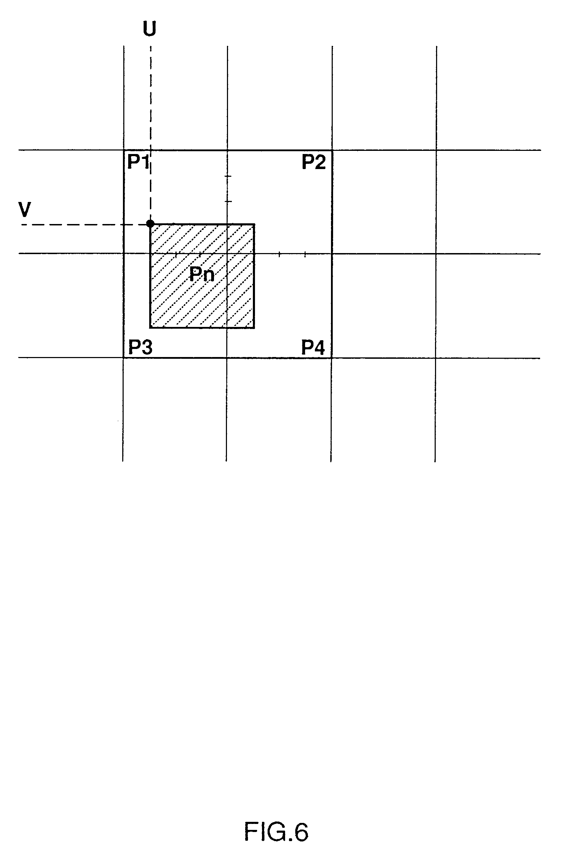

Multiplier-accumulator 182 performs data interpolation on intensity values of neighboring pixels, where (U,V) is the address of a corner pixel of the neighborhood. This is shown in Fig. 6, for an example of a two-dimensional linear interpolation operation, to which reference is now made.

The pixel to be output is pixel $P_n$ whose upper left corner has the address value (U,V). The whole portion values of (U,V) defines the address of a pixel $P_1$. In this example, the desired neighboring pixels of $P_1$ are to the right and below it and are labeled $P_2$, $P_3$ and $P_4$. The intensity value I of $P_n$ is the weighted sum of the intensities of $P_1$ - $P_4$, weighted by the fraction of $P_n$ which each contributes. In this example, the weight of a pixel is determined by the area of each pixel covered by pixel $P_n$. Each weight is reflected in a coefficient value which multiplies the corresponding intensity value in the interpolation process.

Reference is now made back to Fig. 4. The addresses of pixels $P_2$, $P_3$ and $P_4$ are also calculated by address select logic element 180 which addresses line memory 158 to provide to multiplier-accumulator 182 the intensity values I for $P_1$ through $P_4$.

The fractional portions of the values U and V are utilized to address a coefficient LUT 184 which provides to the multiplier-accumulator 182 the coefficients for each pixel used in the convolution. Multiplier-accumulator 182 then performs the desired interpolation and provides the intensity of the interpolated pixel $P_n$ to a data out bus 186.

A control unit 188 is also provided for controlling the overall operation of the circuitry of Fig. 4.

It will be appreciated that the circuitry of Fig. 4 can perform any desired type of convolution technique. The address select logic 180 selects the required neighborhood and the coefficient LUT 184 provides the required coefficients for the chosen convolution technique.

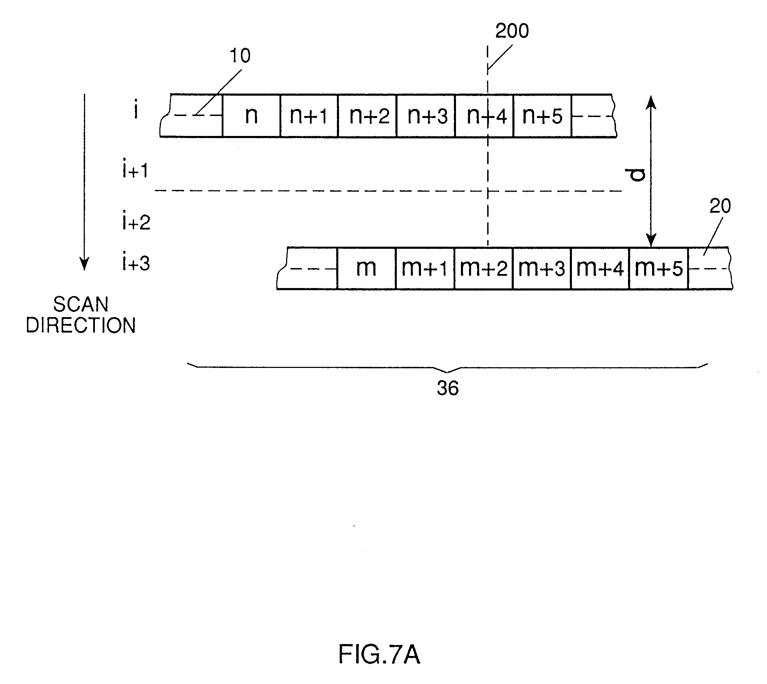

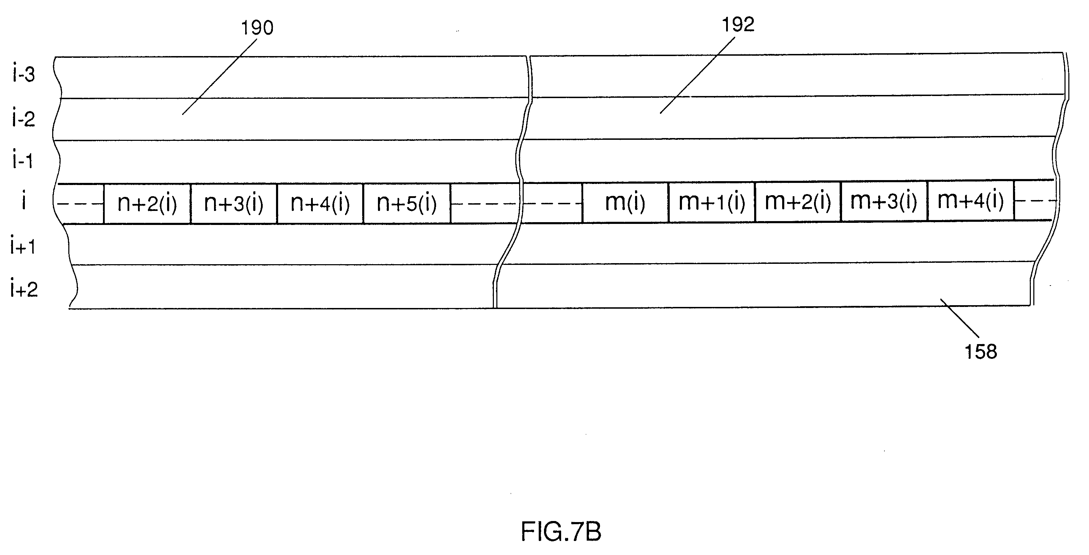

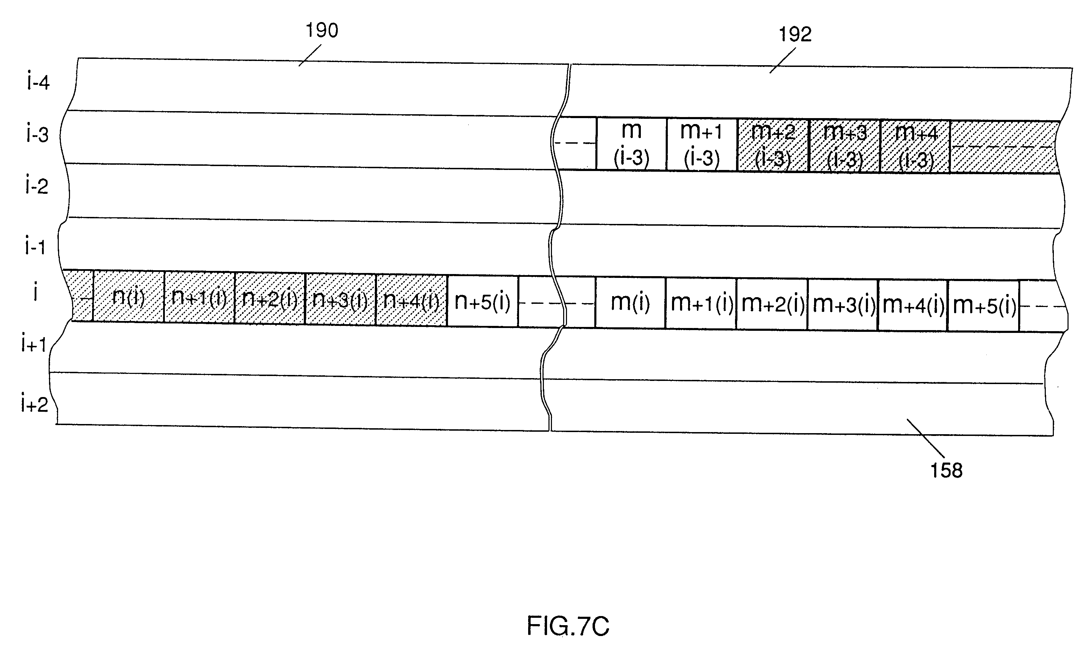

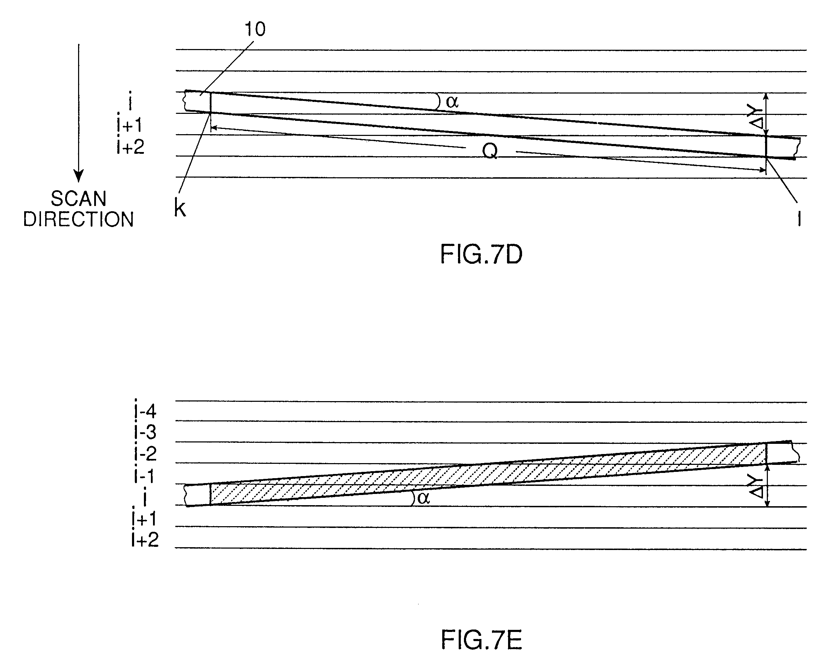

Reference is now made to Figs. 7A, 7B, 7C and 7D which together provide an example of the calculations by which a LUT 172 is filled. For the purposes of simplifying the explanation, the image sensors are approximated, in this example, as straight lines.

Fig. 7A illustrates overlap region 36 between two image sensors 10 and 12 which, for the purposes of simplicity, are two sensors which have only translation misalignment in the Y direction.

The pixels of image sensor 10 in the overlap region 36 are numbered n, n+1, n+2 .. and the pixels of image sensor 12 in the overlap region 36 are numbered m, m+1, m+2... Fig. 7A illustrates changeover point 200 and as can be seen, the changeover pixel for image sensor 10 is pixel n+4 and the changeover pixel for image sensor 12 is pixel m+2.

In Fig. 7A, image sensor 12 is misaligned with sensor 10 by a distance d which is equivalent to the width of three scanning lines.

Fig. 7B schematically shows lines memory 158. At the ith line scan, the scanner reads the intensity data from the image sensors 10 and 12 and places the data into a line i of lines memory 158. Data from image sensors 10 and 12 are respectively placed into regions 190 and 192 of lines memory 158.

Due to the misalignment, the data placed into lines memory 158 during the ith scanned line is not necessarily the data which appears in the ith line of the input image, and in addition, the entirety of the data is placed into the lines memory 158 with no respect to the changeover pixel information.

To correct this, the LUTs 172 are arranged such that the data is read out of the lines memory 158 in a way which compensates for the misalignment of the image sensors with respect to the output line and which takes into account the changeover pixel information.

In Fig. 7C, the data from image sensors 10 and 12 for the overlap region 36 of an ith line of the output image, is taken out from the lines memory 158 as shown by the shaded areas. The remaining data from image sensors 10 and 12 is not utilized.

The values of (U,V) in LUT 172 for the jth output line for the overlap region 36 will address the following pixels: n(i), n+1(i), n+2(i), n+3(i), n+4(i), m+2(i-3), m+3(i-3)..., where k(j) is the value of pixel k acquired at the jth scanned line. Pixels n+4(i) and m+2(i-3) are the changeover pixels in this example.

As is known in the art, the addresses stored in each LUT 172 are prepared in accordance with the above description and also compensate for any misalignment in conjunction with any desired enlargement. The calculations are described hereinbelow for an image sensor modeled as a straight line. Other geometrical descriptions of image sensors can be used, as is known in the art.

Reference is now made to Fig. 7D. For the image sensor 10, there are Q pixels between two changeover pixels, marked in Fig. 7D as pixels k and l. If sensor 10 is at an angle $\alpha$, as is shown in Fig. 7D, the "height" or misalignment of the changeover pixel l with respect to changeover pixel k is delta_Y.

For a given enlargement and resolution, the number of pixels to be output from the sensor is defined as P. Thus, the location distance between output pixels is Q/P and the relationship of the locations of neighboring pixels on image sensor 10 in the X direc-

tion is as follows:
$$U_{j+1} = U_j + Q/P \quad (2)$$
The relationship in the Y direction is:
$$V_{j+1} = V_j + delta\_Y/P \quad (3)$$

As is known in the art, equations 2 and 3 are utilized to produce the addresses in each LUT 172, where each LUT 172 has its own value of Q and delta_Y.

Fig. 7E illustrates the manner in which the data is read from the lines memory 158 for an image sensor, such as shown in Fig. 7D, which has an angular misalignment. The shaded area indicates the area from which the data will be read out for the ith line for the image sensor.

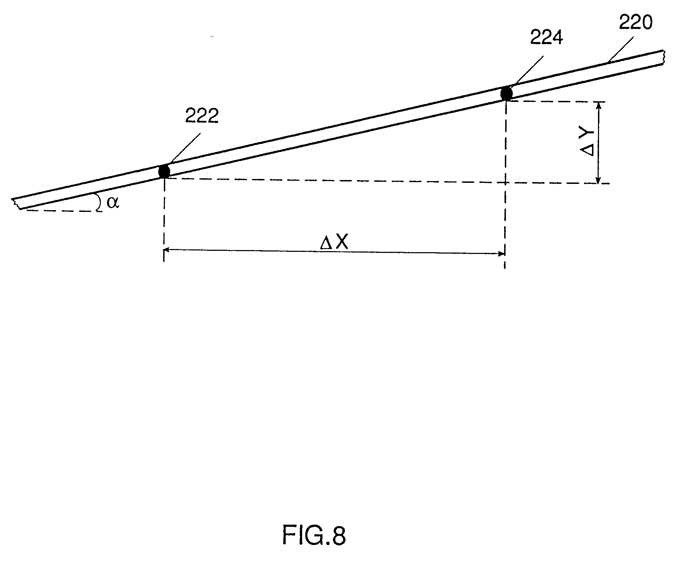

The movement of a changeover pixel in the X diretion minimally affects the location of the changeover pixel in the Y direction. The effect can be calculated, if desired, as described hereinbelow and with reference to Fig. 8.

In Fig. 8, a section of an image sensor 220, positioned at an angle $\alpha$, is shown. Image sensor 220 has a first changeover pixel 222 useful for a first region of the input medium and a second changeover pixel 224, useful for a different region of the input medium.

The distance between pixels 222 and 224 is (delta_X, delta_Y). Delta_X is measured as described hereinabove. Delta_Y can be calculated from delta_X as follows:
$$delta\_Y = delta\_X * tan\alpha \quad (4)$$

It will be appreciated that the values stored in LUTs 172 are calculated according to the misalignment, the changeover pixels and the desired enlargement.

It will be appreciated by persons skilled in the art that the present invention is not limited to what has been particularly shown and described hereinabove. Rather, the scope of the present invention is defined only by the claims that follow:

## Claims

1. Apparatus for changing the changeover pixels during an actual scan of an input medium, the apparatus comprising:

    means for scanning across a two-dimensional surface during a non-actual scan, said means for scanning comprising at least two optically butt image sensors;

    means, operative during said non-actual scan, for determining the changing locations of changeover pixels of said image sensors, said changing locations caused at least by non-uniformities in said two-dimensional surface;

    correction means, operative during said actual scan, for redefining the changeover pixels in accordance with the output of said means for determining.

2. Apparatus for two-dimensional mapping of a two-dimensional scan plane, the apparatus comprising:

means for scanning across said scan plane during a non-actual scan, said means for scanning comprising at least two optically butt image sensors; and

means, operative during said non-actual scan, for determining effects of non-uniformities in said two-dimensional scan plane on an output image.

3. Apparatus according to either of claims 1 or 2 and wherein said means for determining comprise at least one light source for providing a beam of light to a region of overlap on said input medium between two of said at least two image sensors, each of said two image sensors providing output indicating where said beam of light is imaged.

4. Apparatus according to either of claims 1 or 2 and wherein said means for determining comprise a calibration page.

5. Apparatus for determining the geometry of an optical system comprising at least one image sensor, at least one lens and a scan plane, the apparatus comprising:

at least one focused light source for illuminating said scan plane thereby to create a pattern of light, wherein said at least one image sensor detects said pattern of light and provides output regarding said pattern of light;

means for determining geometrical parameters of said optical system from said output of said at least one image sensor.

6. Apparatus for determining changeover pixels for at least two image sensors detecting an input medium, the apparatus comprising:

at least one light source for providing a beam of light to a region of overlap on said input medium between two of said at least two image sensors, each of said two image sensors providing output indicating where said beam of light is imaged; and

means receiving said image sensor output for defining said changeover pixel.

7. A calibration page for a scanner useful in determining a changeover pixel for at least two image sensors detecting an input medium, the calibration page comprising:

a page registration area for repeatably aligning the calibration page in the scanner; and

a non-uniformity measurement area comprising markings in a direction perpendicular to a scanning direction, each of said markings located at an overlap region of two of said at least two image sensors.

8. A method for changing the changeover pixels during an actual scan of an input medium, the method comprising the steps of:

scanning across a two-dimensional surface during a non-actual scan utilizing at least two optically butt image sensors;

during said non-actual scan, determining the changing locations of changeover pixels of said image sensors, said changing locations caused at least by non-uniformities in said two-dimensional surface; and

redefining the changeover pixels in accordance with the output of said step of determining.

9. Method for two-dimensional mapping of a two-dimensional scan plane, the method comprising the steps of:

scanning across said scan plane during a non-actual scan utilizing at least two optically butt image sensors;

during said non-actual scan, determining effects of non-uniformities in said two-dimensional scan plane on an output image.

10. Method for determining the geometry of an optical system comprising at least one image sensor, at least one lens and a scan plane, the method comprising the steps of:

illuminating said scan plane with at least one point light source creating therewith a pattern of light;

detecting said pattern of light with said at least one image sensor and providing output regarding said pattern of light;

determining geometrical parameters of said optical system from said output.

FIG. BA-1

62    63

18

D

47                16

FIG. BA-2A

62    63

18

D1

70

16

FIG. BA-2B

62    63

18

D2

72

16

FIG. BA-2C

FIG. BA-3A

FIG. BA-3B

FIG. BA-3C

FIG. BA-4

FIG. 1A

FIG. 1B

FIG.2A

FIG. 2B

FIG. 3A

FIG. 3B

FIG. 3C

FIG. 3D

FIG. 3E

FIG. 3F

FIG. 4

FIG.5

FIG.6

EP 0 526 070 A2

SCAN
DIRECTION

FIG.7A

FIG.7B

FIG.7C

EP 0 526 070 A2

10

i
i+1
i+2

α

ΔY

Q

SCAN
DIRECTION

k

l

## FIG.7D

i-4
i-3
i-2
i-1
i
i+1
i+2

α

ΔY

## FIG.7E

FIG.8